(19) Europäisches Patentamt / European Patent Office / Office européen des brevets

(11) EP 3 086 493 A1

(12) **EUROPEAN PATENT APPLICATION**
published in accordance with Art. 153(4) EPC

(43) Date of publication:
26.10.2016 Bulletin 2016/43

(51) Int Cl.:
*H04J 14/02* (2006.01)     *H04Q 11/00* (2006.01)

(21) Application number: 13897025.6

(22) Date of filing: 05.11.2013

(86) International application number:
PCT/CN2013/001341

(87) International publication number:
WO 2015/066830 (14.05.2015 Gazette 2015/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• QIU, Chen
Shenzhen
Guangdong 518129 (CN)

• HAO, Qinfen
Shenzhen
Guangdong 518129 (CN)
• LIU, Yaoda
Shenzhen
Guangdong 518129 (CN)

(74) Representative: Kreuz, Georg Maria
Huawei Technologies Duesseldorf GmbH
Riesstrasse 8
80992 München (DE)

(54) **WAVELENGTH ROUTING DEVICE**

(57)     The present invention provides a wavelength routing device. The device includes: a primary circuit, and a secondary circuit, where the primary circuit includes N 2 x 2 wavelength switches, the secondary circuit includes two N x N wavelength routers, and each N x N wavelength router includes at least one 2 x 2 wavelength switch, where a value of N is $2^n$, n being a positive integer; and an input port of each 2 x 2 wavelength switch in the primary circuit is connected to an input stage, an output port of each 2 x 2 wavelength switch is connected to an input port of an N x N wavelength router of the secondary circuit, and an output port of the N x N wavelength router of the secondary circuit is connected to an output stage. In the present invention, the primary circuit includes N 2 x 2 wavelength switches and the secondary circuit includes two N x N wavelength routers, which simplifies a topology of a wavelength routing device, and reduces a quantity of optical switch nodes in a wavelength routing device.

FIG. 3

EP 3 086 493 A1

**Description**

**TECHNICAL FIELD**

The present invention relates to optical network technologies, and in particular, to a wavelength routing device based on a wavelength cross filter.

**BACKGROUND**

An optical router is an important constituent part of an optical interconnection technology, and can connect transmit and receive nodes, so that an optical signal sent from the transmit node is accurately transmitted to the receive node. Optical routers can be mainly divided into two categories: a spatial router based on a spatial optical switch and a wavelength router based on a wavelength optical switch, where the wavelength router becomes a research hotspot because the wavelength router can implement self-routing of optical signal without the need to perform dynamic adjustment. An optical router based on a wavelength cross filter uses periodic characteristics of spectrum filtering of the wavelength cross filter, and therefore can effectively reduce a quantity of switch nodes in an optical wavelength router and reduce the size and time delay of the router.

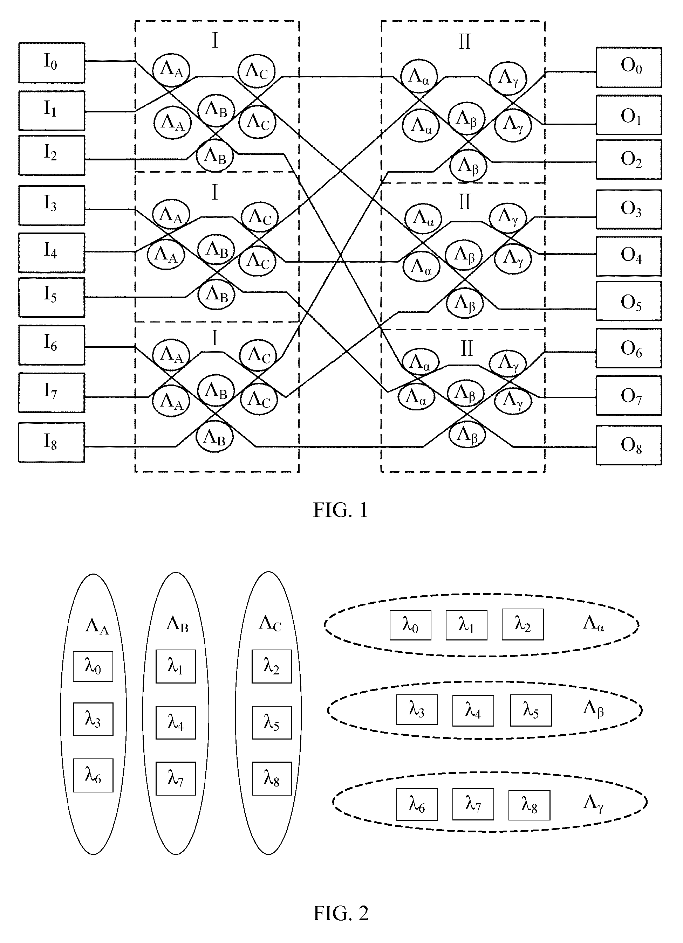

In the prior art, a topology of an optical router based on a wavelength cross filter is shown in FIG. 1, and FIG. 1A is a diagram of a 9 x 9 topology in a WRON-RC technology. A routing table of an optical switch node of each stage is shown in FIG. 2. As can be learned from FIG. 2, for a switch node $\Lambda_A$, responses of the switch to optical signal with wavelengths of $\lambda0$, $\lambda3$, and $\lambda6$ are cross, and responses to optical signal with wavelengths of $\lambda1$, $\lambda2$, $\lambda4$, $\lambda5$, $\lambda7$, and $\lambda8$ are bar. In the diagram of the 9 x 9 topology, when optical signal with a different wavelength is input from an input port, for example $I_0$, and optical signal with a wavelength is output from an output port, for example $O_1$, optical signal needs to pass through four optical switches to finally output optical signal with a particular wavelength.

However, in the prior art, an optical router based on a wavelength cross filter still has a very complex topology, and a large quantity of optical switches are needed in a wavelength router.

**SUMMARY**

The present invention provides a wavelength routing device, which simplifies a topology of a wavelength routing device, and reduces a quantity of optical switch nodes in the wavelength routing device.

An embodiment of the present invention provides a wavelength routing device, including:

a primary circuit and a secondary circuit, where
the primary circuit includes N 2 x 2 wavelength switches, the secondary circuit includes two N x N wavelength routers, and each N x N wavelength router includes at least one 2 x 2 wavelength switch, where a value of N is $2^n$, n being a positive integer; and
in the primary circuit, an input port of each 2 x 2 wavelength switch is connected to an input stage and an output port of each 2 x 2 wavelength switch is connected to an input port of an N x N wavelength router of the secondary circuit, and output ports of the N x N wavelength routers of the secondary circuit are connected to an output stage.

Further, the input stage includes 2N input ports, where the input ports in the input stage are correspondingly and separately connected to the input ports of the 2 x 2 wavelength switches in the primary circuit, and the output ports of the 2 x 2 wavelength switches in the primary circuit are correspondingly connected to the input ports of the N x N wavelength routers in the secondary circuit separately.

Further, the output stage includes 2N output ports, where the output ports in the output stage are correspondingly and separately connected to the output ports of the N x N wavelength routers in the secondary circuit.

Further, a quantity N1 of 2 x 2 wavelength switches in the wavelength routing device is determined by using a formula (1):

$$N1 = (M1/2)\log_2 M1 \qquad (1)$$

where M1 is a quantity of the input ports in the input stage or a quantity of the output ports in the output stage.

Further, in the wavelength routing device, a quantity N2 of 2 x 2 wavelength switches that input optical signal needs to pass through from an input port of the input stage to a specified output port of the output stage is determined by using a formula (2):

$$N1 = \log_2 M2 \qquad (2)$$

where M2 is the quantity of the input ports or the quantity of the output ports.

According to the wavelength routing device provided in the embodiments of the present invention, in the device, the primary circuit includes N 2 x 2 wavelength switches and the secondary circuit includes two N x N wavelength routers, which simplifies a topology of the wavelength routing device, and reduces a quantity of optical switch nodes in the wavelength routing device.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic diagram of a topology of a routing device in the prior art;
FIG. 2 is a schematic diagram of a routing table of wavelength switches of the routing device in FIG. 1;
FIG. 3 is a schematic structural diagram of a wavelength routing device according to Embodiment 1 of the present invention;
FIG. 4 is a schematic structural diagram of a 2 x 2 wavelength switch of the wavelength routing device according to Embodiment 1 of the present invention;
FIG. 5 is a first schematic diagram of input optical signal with the spectrum of a wavelength routing device according to the present invention;
FIG. 6A to FIG. 6D are schematic diagrams of spectral responses of output ports to input ports of a 2 x 2 wavelength switch in a primary circuit of the wavelength routing device according to Embodiment 1 of the present invention;
FIG. 7 is a schematic structural diagram of a wavelength routing device according to Embodiment 2 of the present invention;
FIG. 8 is a schematic structural diagram of a 2 x 2 wavelength switch of the wavelength routing device according to Embodiment 2 of the present invention;
FIG. 9 is a second schematic diagram of input optical signal with the spectrum of a wavelength routing device according to the present invention;
FIG. 10A to FIG. 10D are schematic diagrams of spectral responses of output ports to input ports of a 2 x 2 wavelength switch in a primary circuit of the wavelength routing device according to Embodiment 2 of the present invention;
FIG. 10E to FIG. 10H are schematic diagrams of spectral responses of output ports to input ports of a 2 x 2 wavelength switch in a secondary circuit of the wavelength routing device according to Embodiment 2 of the present invention; and
FIG. 11 is a schematic structural diagram of a wavelength routing device according to Embodiment 3 of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

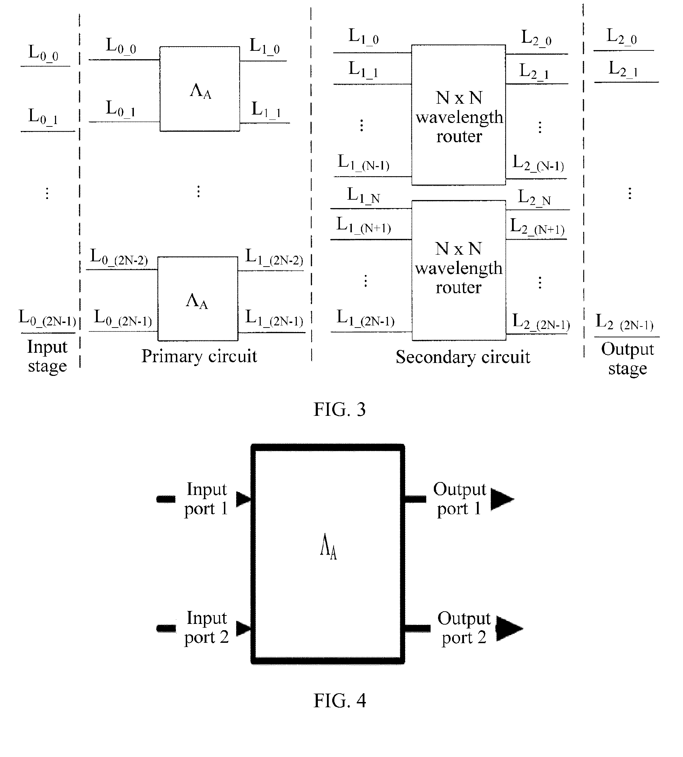

FIG. 3 is a schematic structural diagram of a wavelength routing device according to Embodiment 1 of the present invention, and FIG. 4 is a schematic structural diagram of a 2 x 2 wavelength switch of the wavelength routing device according to Embodiment 1 of the present invention. The routing device provided in this embodiment is a wavelength router based on a wavelength optical switch, is applicable to an optical interconnection technology, and can implement transmission of an optical signal between transmit and receive nodes. Referring to FIG. 3 and FIG. 4, the wavelength routing device of this embodiment may include: a primary circuit and a secondary circuit.

The primary circuit includes N 2 x 2 wavelength switches $\Lambda_A$, the secondary circuit includes two N x N wavelength routers, and each N x N wavelength router includes at least one 2 x 2 wavelength switch $\Lambda_A$, where a value of N is $2^n$, n being a positive integer.

In this embodiment, the N 2 x 2 wavelength switches $\Lambda_A$ and the two N x N wavelength routers are combined to form one 2N x 2N wavelength routing device. For example, when the value of N is 2, a 4 x 4 wavelength routing device includes two 2 x 2 wavelength switches $\Lambda_A$ and two 2 x 2 wavelength routers. In this case, each 2 x 2 wavelength router includes only one 2 x 2 wavelength switch $\Lambda_A$, and therefore, it may be considered that the 4 x 4 wavelength routing device includes four 2 x 2 wavelength switches $\Lambda_A$. When the value of N is 4, an 8 x 8 wavelength routing device includes 4 2 x 2 wavelength switches $\Lambda_A$ and two 4 x 4 wavelength routers, and the corresponding 4 x 4 wavelength routing device when the value of N is 2 may be used as the 4 x 4 wavelength router, and in this case, the 4 x 4 wavelength router includes four 2 x 2 wavelength switches $\Lambda_A$. Correspondingly, a 16 x 16 wavelength routing device includes eight 2 x 2 wavelength switches $\Lambda_A$ and two 8 x 8 wavelength routers, where the composition of the 8 x 8 wavelength router is the same as the composition of the 8 x 8 wavelength routing device.

In this embodiment, in the primary circuit, an input port of each 2 x 2 wavelength switch $\Lambda_A$ is connected to an input stage and an output port of each 2 x 2 wavelength switch $\Lambda_A$ is connected to an input port of an N x N wavelength router of the secondary circuit, and output ports of the N x N wavelength routers of the secondary circuit are connected to an output stage. Further, in this embodiment, each 2 x 2 wavelength switch $\Lambda_A$ includes two input ports and two output ports (for example, input port 1, input port 2, output port 1, and output port 2 shown in FIG. 4). The input stage includes 2N input ports, for example, input ports $L_{0\_0}$ to $L_{0\_(2N-1)}$ of the input stage in FIG. 3. The input ports in the input stage are correspondingly and separately connected to the input ports of the 2 x 2 wavelength switches $\Lambda_A$, that is, every two input ports in the input stage are correspondingly and separately connected to the two input ports of a 2 x 2 wavelength switch $\Lambda_A$ in FIG. 4. The output ports (for example, L1_0 to $L_{1\_(2N-1)}$ in the primary circuit in FIG. 3) of the 2 x 2 wavelength switches $\Lambda_A$ are correspondingly and separately connected to the input ports (for example, $L_{1\_0}$ to $L_{1\_(2N-1)}$ in the secondary circuit in FIG. 3) of the N x N wavelength routers in the secondary circuit. Each N x N wavelength router includes N input ports and N output ports. The output stage includes 2N output ports, for example, output ports $L_{2\_0}$ to $L_{2\_(2N-1)}$ in the output stage in FIG. 3. The output ports of the output stage are correspondingly and separately connected to output ports (for example, $L_{2\_0}$ to $L_{2\_(2n-1)}$ in the secondary circuit in FIG. 3) of the N x N wavelength routers of the secondary circuit. For example, when the value of N is 4, for an 8 x 8 wavelength routing device, a quantity of the input ports of the input stage and a quantity of the ports of the output stage are both 8, and each 4 x 4 wavelength router has four input ports and four output ports.

According to the wavelength routing device provided in this embodiment of the present invention, in the device, the primary circuit includes N 2 x 2 wavelength switches and the secondary circuit includes two N x N wavelength routers, which simplifies a topology of the wavelength routing device, and reduces a quantity of optical switch nodes in the wavelength routing device.

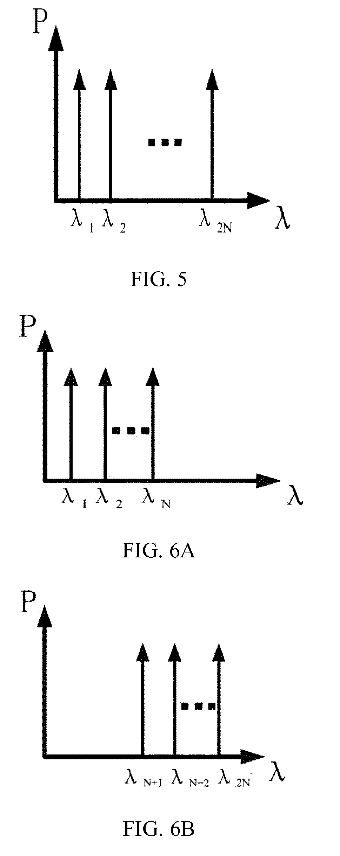

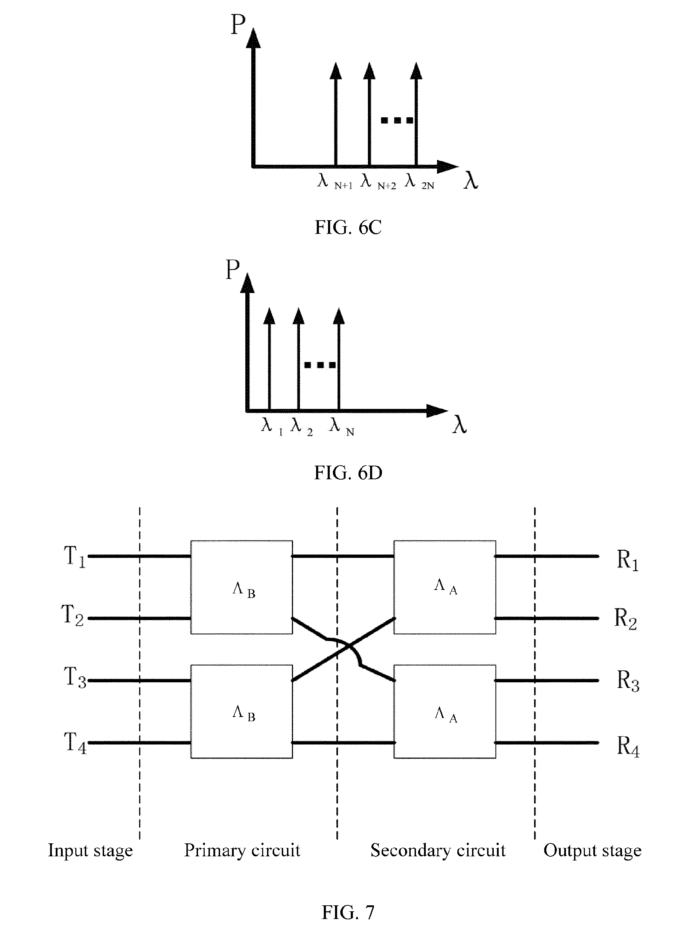

FIG. 5 is a first schematic diagram of input optical signal with the spectrum of a wavelength routing device according to the present invention, and FIG. 6A to FIG. 6D are schematic diagrams of spectral responses of output ports to input ports of a 2 x 2 wavelength switch in a primary circuit of a wavelength routing device according to the present invention. Referring to FIG. 5 to FIG. 6D, in this embodiment, a longitudinal coordinate is optical power P and a horizontal coordinate is a wavelength $\lambda$ in FIG. 5 to FIG. 6D. Further, in the foregoing embodiment, when the input optical signal with the spectrum shown in FIG. 5 is separately input from the ports of the input stage, a spectrum effect of an output port 1 to an input port 1 in the 2 x 2 wavelength switch $\Lambda_A$ in the primary circuit is shown in FIG. 6A; a spectrum effect of an output port 2 to the input port 1 in the 2 x 2 wavelength switch $\Lambda_A$ in the primary circuit is shown in FIG. 6B, that is, after the input optical signal with the spectrum enters the input port 1 of the 2 x 2 wavelength switch $\Lambda_A$, optical signal with the spectrum output from the output port 1 is $\lambda_1$, $\lambda_2$, ..., $\lambda_N$, and optical signal with the spectrum output from the output port 2 is $\lambda_{N+1}$, $\lambda_{N+2}$, ..., $\lambda_{2N}$; and correspondingly, a spectrum effect of the output port 1 to an input port 2 in the 2 x 2 wavelength switch $\Lambda_A$ in the primary circuit is shown in FIG. 6C, and a spectrum effect of the output port 2 to the input port 2 in the 2 x 2 wavelength switch $\Lambda_A$ in the primary circuit is shown in FIG. 6D, that is, after input optical signal with the spectrum shown in FIG. 5 enters the input port 2 of the 2 x 2 wavelength switch $\Lambda_A$, optical signal with the spectrum output from the output port 1 is $\lambda_{N+1}$, $\lambda_{N+2}$, ..., $\lambda_{2N}$, and optical signal with the spectrum output from the output port 2 is $\lambda_1$, $\lambda_2$, ..., $\lambda_N$.

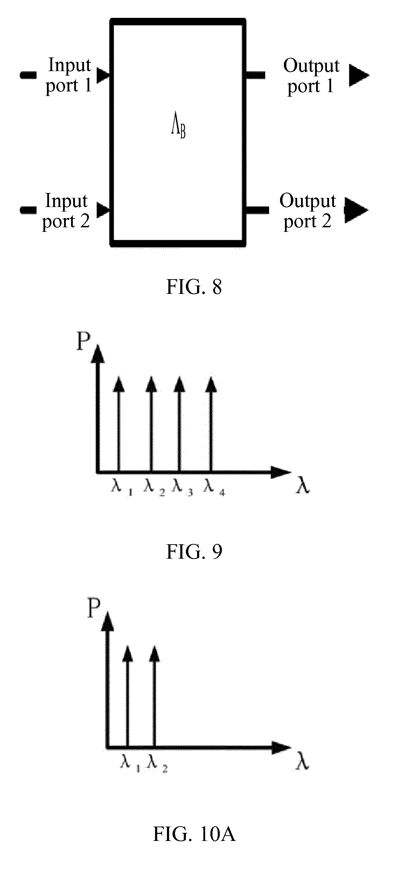

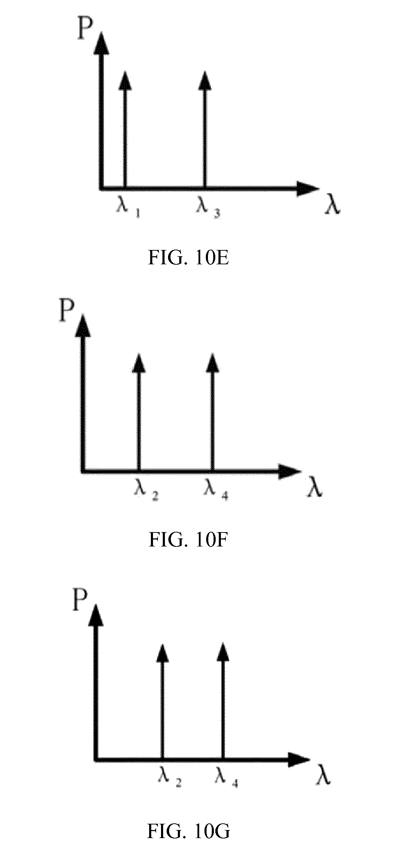

FIG. 7 is a schematic structural diagram of a wavelength routing device according to Embodiment 2 of the present invention. FIG. 8 is a schematic structural diagram of a 2 x 2 wavelength switch of the wavelength routing device according to Embodiment 2 of the present invention. FIG. 9 is a second schematic diagram of input optical signal with the spectrum of a wavelength routing device according to the present invention, FIG. 10A to FIG. 10H are schematic diagrams of spectral responses of output ports to input ports of a 2 x 2 wavelength switch in a primary circuit of the wavelength routing device according to Embodiment 2 of the present invention. FIG. 10E to FIG. 10H are schematic diagrams of spectral responses of output ports to input ports of a 2 x 2 wavelength switch in a secondary circuit of the wavelength routing device according to Embodiment 2 of the present invention.

Based on the foregoing embodiments, in this embodiment, when a value of N is 2, a structure of a corresponding 4 x 4 wavelength routing device is shown in FIG. 7. The 4 x 4 wavelength routing device includes two 2 x 2 wavelength switches $\Lambda_B$ in a primary circuit and two 2 x 2 wavelength routers, where each 2 x 2 wavelength router includes one 2 x 2 wavelength switch $\Lambda_A$, and therefore, the 2 x 2 wavelength switch $\Lambda_A$ is used in this embodiment as the 2 x 2 router of the secondary circuit. Structures and functions of the 2 x 2 wavelength switch $\Lambda_A$ and the 2 x 2 wavelength switch $\Lambda_B$ (as shown in FIG. 8) in this embodiment are the same as those of the 2 x 2 wavelength switch $\Lambda_A$ in the foregoing embodiments, and therefore, for the 2 x 2 wavelength switch $\Lambda_A$ in this embodiment, refer to $\Lambda_A$ shown in FIG. 4. Sequences for connecting the 2 x 2 wavelength switches $\Lambda_A$ and the 2 x 2 wavelength switches $\Lambda_B$ are interchangeable.

In this embodiment, four input ports in the input stage are represented separately by four nodes, that is, input nodes $T_1$, $T_2$, $T_3$, and $T_4$. Correspondingly, four output ports in the output stage are represented by output nodes $R_1$, $R_2$, $R_3$, and $R_4$. The four input nodes $T_1$, $T_2$, $T_3$, and $T_4$ are correspondingly connected to input ports of the 2 x 2 wavelength switches $\Lambda_B$ in the primary circuit, the four nodes $R_1$, $R_2$, $R_3$, and $R_4$ are correspondingly connected to output nodes of the 2 x 2 wavelength switches $\Lambda_A$ of the secondary circuit, and the 2 x 2 wavelength switches $\Lambda_B$ in the primary circuit are cross-connected to the 2 x 2 wavelength switches $\Lambda_A$ in the secondary circuit shown in FIG. 7.

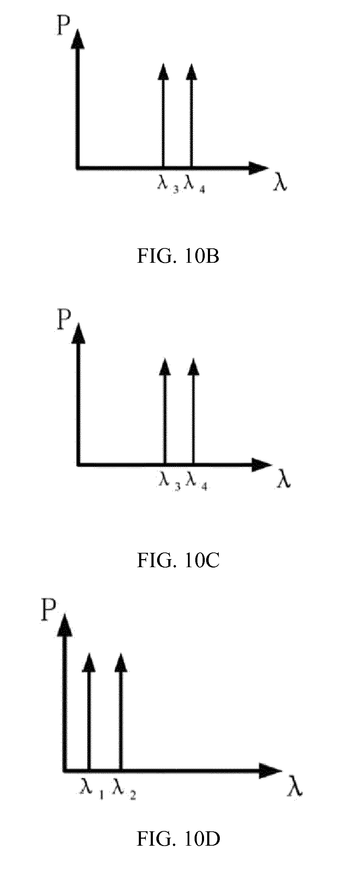

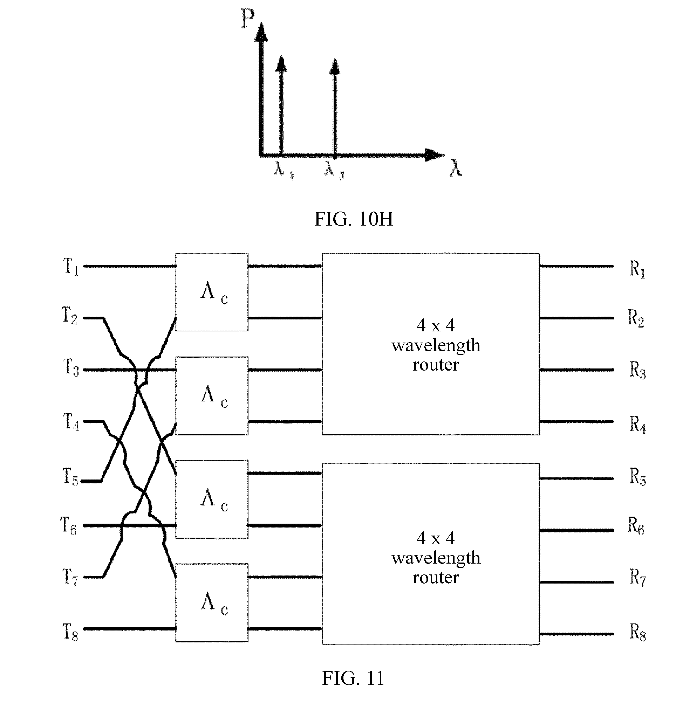

For example, when optical signal with the spectrum shown in FIG. 9 is separately input from the input nodes in the input stage, a spectral response of an output port 1 to an input port 1 of the 2 x 2 wavelength switch $\Lambda_B$ in the primary circuit is shown in FIG. 10A, and a spectral response of an output port 2 to the input port 1 of the 2 x 2 wavelength switch $\Lambda_B$ is shown in FIG. 10B, that is, when optical signal with the spectrum is input from the input node $T_1$, wavelengths output from the output port 1 of the 2 x 2 wavelength switch $\Lambda_B$ are $\lambda_1$ and $\lambda_2$, and wavelengths output from the output port 2 are $\lambda_3$ and $\lambda_4$; and a spectral response of the output port 1 to an input port 2 of the 2 x 2 wavelength switch $\Lambda_B$ in the primary circuit is shown in FIG. 10C, and a spectral response of the output port 2 to the input port 2 of the 2 x 2 wavelength switch $\Lambda_B$ is shown in FIG. 10D, that is, when the optical signal with the spectrum is input from the input node $T_2$, wavelengths output from the output port 1 of the 2 x 2 wavelength switch $\Lambda_B$ are $\lambda_3$ and $\lambda_4$, and wavelengths output from the output port 2 are $\lambda_1$ and $\lambda_2$. After the optical signal with the spectrum passes through the 2 x 2 wavelength switches $\Lambda_B$ in the primary circuit, $\lambda_1$ and $\lambda_2$ (input optical signal from $T_1$) and $\lambda_3$ and $\lambda_4$ (input optical signal from $T_2$) that are output from the output port 1 of the 2 x 2 wavelength switch $\Lambda_B$ in the primary circuit are input to an input port 1 of the 2 x 2 wavelength switch $\Lambda_A$ in the secondary circuit (as shown in FIG. 4). Correspondingly, $\lambda_3$ and $\lambda_4$ (input optical signal from $T_1$) and $\lambda_1$ and $\lambda_2$ (input optical signal from $T_2$) that are output from the output port 2 of a 2 x 2 wavelength switch $\Lambda_B$ in the primary circuit are input into an input port 1 of the other 2 x 2 wavelength switch $\Lambda_A$ in the secondary circuit (as shown in FIG. 4). A spectral response of an output port 1 to the input port 1 of the 2 x 2 wavelength switch $\Lambda_A$ in the secondary circuit is shown in FIG. 10E, and a spectral response of an output port 2 to the input port 1 of the 2 x 2 wavelength switch $\Lambda_A$ is shown in FIG. 10F, that is, after $\lambda 1$ and $\lambda 2$ (input optical signal from $T_1$) and $\lambda 3$ and $\lambda 4$ (the spectrum input from $T_2$) are input from the input port 1, $\lambda_1$ (input optical signal from $T_1$) and $\lambda_3$ (input optical signal from $T_2$) are output from the output node R1, and $\lambda_2$ (input optical signal from $T_1$) and $\lambda_4$ (input optical signal from $T_2$) are output from the output node R2. Correspondingly, a spectral response of the output port 1 to an input port 2 of the 2 x 2 wavelength switch $\Lambda_A$ in the secondary circuit is shown in FIG. 10G, and a spectral response of the output port 2 to the input port 2 is shown in FIG. 10H, that is, after input from $T_3$ and $T_4$ and input from the input port 2 of the 2 x 2 wavelength switch $\Lambda_A$ in the secondary circuit, $\lambda_2$ (input optical signal from $T_3$) and $\lambda_4$ (input optical signal from $T_4$) are output from the output node $R_1$, and $\lambda_1$ (input optical signal from $T_3$) and $\lambda_3$ (input optical signal from $T_4$) are output from the output node $R_2$.

A routing table of the 4 x 4 wavelength routing device in this embodiment is shown in Table 1.

Table 1 Routing table of 4 x 4 wavelength routing device

| Output Port $(R_x)$/Input Port $(T_x)$ | $R_1$ | $R_2$ | $R_3$ | $R_4$ |
|---|---|---|---|---|
| $T_1$ | $\lambda_1$ | $\lambda_2$ | $\lambda_3$ | $\lambda_4$ |
| $T_2$ | $\lambda_3$ | $\lambda_4$ | $\lambda_1$ | $\lambda_2$ |
| $T_3$ | $\lambda_2$ | $\lambda_1$ | $\lambda_4$ | $X_3$ |
| $T_4$ | $\lambda_4$ | $\lambda_3$ | $\lambda_2$ | $\lambda_1$ |

It can be learned from Table 1 that when the input node $T_1$ needs to communicate with the output node $R_3$, the signal can be self-routed to the output node $R_3$ by means of the 4 x 4 wavelength routing device of this embodiment by simply modulating a signal onto a carrier with a wavelength of $\lambda_3$ at the input node $T_1$.

According to the wavelength routing device provided in this embodiment of the present invention, in the device, the primary circuit includes two 2 x 2 wavelength switches and the secondary circuit includes two 2 x 2 wavelength routers, which simplifies a topology of the wavelength routing device, and reduces a quantity of optical switch nodes in the wavelength routing device.

FIG. 11 is a schematic structural diagram of a wavelength routing device according to Embodiment 3 of the present invention. Based on the foregoing embodiment, this embodiment provides an 8 x 8 routing device, that is, a corresponding routing device when a value of N is 4. As shown in FIG. 11, in this embodiment, the 8 x 8 routing device includes four 2 x 2 wavelength switches $A_C$ of a primary circuit and two 4 x 4 wavelength routers of a secondary circuit, input nodes $T_1$ to $T_8$, and output nodes $R_1$ to $R_8$, where a connection relationship between the input nodes $T_1$ to $T_8$ and input ports of the four 2 x 2 wavelength switches $\Lambda_C$ of the primary circuit is shown in FIG. 11, and the connection relationship in the 4 x 4 routing device in Embodiment 2 is used for the two 4 x 4 wavelength routers of the secondary circuit. In this embodiment, the 4 x 4 wavelength router includes four 2 x 2 wavelength switches $\Lambda_A$ (as shown in FIG. 3), and for a specific implementation manner, refer to the implementation method of Embodiment 2.

Further, based on the foregoing embodiment, in this embodiment, a quantity N1 of 2 x 2 wavelength switches in the wavelength routing device is determined by using a formula (1):

$$N1 = (M1/2)\log_2 M1 \qquad (1)$$

A quantity N2 of 2 x 2 wavelength switches that input optical signal needs to pass through from an input port (for example, nodes $T_1$ to $T_8$) of the input stage to a specified output port (for example, nodes $R_1$ to $R_8$) of the output stage is determined by using a formula (2):

$$N1 = \log_2 M2 \qquad (2)$$

where M1 is a quantity of input ports in the input stage or a quantity of output ports in the output stage.

For example, for the 8 x 8 routing device, the quantity of input ports of the input stage is 8, and therefore, the total quantity of 2 x 2 wavelength switches in the 8 x 8 routing device is 12, and the quantity of 2 x 2 wavelength switches that input optical signal passes through from the node $T_1$ to the node $R_8$ is 3. Compared with the prior art, for a 16 x 16 routing device, when the quantity of input ports is 16, 32 2 x 2 wavelength switches are needed in the present invention, and four 2 x 2 wavelength switches are passed through (while in the prior art, four optical switches need to be passed through for even a 9 x 9 routing device); while in the prior art, a 16 x 16 routing device needs a total of 48 optical switches. For a 64 x 64 routing device, 192 2 x 2 wavelength switches are needed in the present invention, while 448 optical switches are needed in the prior art.

Therefore, in the wavelength routing device of this embodiment of the present invention, the primary circuit includes N 2 x 2 wavelength switches and the secondary circuit includes two N x N wavelength routers; in this way, on the one hand, a topology of the wavelength routing device is simplified, and on the other hand, not only a quantity of optical switches in the routing device can be reduced, where the reduction in the quantity of optical switches is more significant for a larger optical network, but also a quantity of optical switches that input optical signal passes through in the routing device can be reduced, thereby improving efficiency of the routing device.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1.    A wavelength routing device, comprises:

a primary circuit, a secondary circuit;
wherein the primary circuit comprises N 2 x 2 wavelength switches, the secondary circuit comprises two N x N wavelength routers, and each N x N wavelength router comprises at least one 2 x 2 wavelength switch, wherein a value of N is $2^n$, n being a positive integer; and
the input stage are connected to input ports of the each 2 x 2 wavelength switches in the primary circuit, output ports of the each 2 x 2 wavelength switches are connected to input ports of two N x N wavelength routers in the secondary circuit in one-to-one correspondence, and output ports of the two N x N wavelength routers in the secondary circuit are connected to the output stage in one-to-one correspondence.

2. The device according to claim 1, wherein the input stage comprises 2N input ports, each input port of the input stage are connected to each input ports of the 2 x 2 wavelength switches in the primary circuit in one-to-one correspondence, each output port of the 2 x 2 wavelength switches in the primary circuit is connected to each input port of the N x N wavelength router in the secondary circuit in one-to-one correspondence.

3. The device according to claim 1, wherein the output stage comprises 2N output ports, each output port of the N x N wavelength router in the secondary circuit is connected to each output port of the output stage in one-to-one correspondence.

4. The device according to any one of claims 2-3, wherein a quantity N1 or 2 x 2 wavelength switches in the wavelength routing device is determined by using a formula (1):

$$N1 = (M1/2)\log_2 M1 \qquad (1)$$

wherein M1 is a quantity of the input ports in the input stage or a quantity of the output ports in the output stage.

5. The device according to any one of claims 2-4, wherein in the wavelength routing device, a quantity N2 of 2 x 2 wavelength switches that each optical signal needs to pass through from an input port of the input stage to an output port of the output stage is determined by using a formula (2):

$$N2 = \log_2 M2 \qquad (2)$$

wherein M2 is the quantity of the input ports in the input stage or the quantity of the output ports in the output stage.


**Amended claims under Art. 19.1 PCT**

1. A wavelength routing device, wherein the wavelength routing device comprises: an input stage, a primary circuit, a secondary circuit, and an output stage, wherein the input stage comprises 2N input ports, and the output stage comprises 2N output ports, wherein a value of N is $2^n$, n being a positive integer;
   the primary circuit comprises N 2 x 2 wavelength switches, the secondary circuit comprises two N x N wavelength routers, and each N x N wavelength router comprises at least one 2 x 2 wavelength switch; and
   the 2N input ports of the input stage are connected to 2N input ports of the N 2 x 2 wavelength switches in the primary circuit in one-to-one correspondence, 2N output ports of the N 2 x 2 wavelength switches in the primary circuit are connected to 2N input ports of the two N x N wavelength routers in the secondary circuit in one-to-one correspondence, and 2N output ports of the two N x N wavelength routers in the secondary circuit are connected to the 2N output ports of the output stage in one-to-one correspondence.

2. The device according to claim 1, wherein a quantity N1 of 2 x 2 wavelength switches in the wavelength routing device is determined by using a formula (1):

$$N1 = (M1/2)\log_2 M1 \qquad (1)$$

wherein M1 is a quantity of the input ports in the input stage or a quantity of the output ports in the output stage, a value of M1 is 2N, and a value of N is $2^n$, n being a positive integer.

3. The device according to claim 1 or 2, wherein in the wavelength routing device, a quantity N2 of 2 x 2 wavelength switches that each optical signal needs to pass through from an input port of the input stage to an output port of the output stage is determined by using a formula (2):

$$N2 = \log_2 M2 \qquad (2)$$

wherein M2 is the quantity of the input ports in the input stage or the quantity of the output ports in the output stage, M2=2N, and a value of N is $2^n$, n being a positive integer.

FIG. 1

FIG. 2

FIG. 3

FIG. 4

FIG. 5

FIG. 6A

FIG. 6B

FIG. 6C

FIG. 6D

Input stage    Primary circuit    Secondary circuit    Output stage

FIG. 7

EP 3 086 493 A1

FIG. 8

FIG. 9

FIG. 10A

FIG. 10B

FIG. 10C

FIG. 10D

FIG. 10E

FIG. 10F

FIG. 10G

FIG. 10H

FIG. 11

# INTERNATIONAL SEARCH REPORT

| International application No. |
| --- |
| PCT/CN2013/001341 |

## A. CLASSIFICATION OF SUBJECT MATTER

H04J 14/02 (2006.01) i

According to International Patent Classification (IPC) or to both national classification and IPC

## B. FIELDS SEARCHED

Minimum documentation searched (classification system followed by classification symbols)

H04J; H04Q

Documentation searched other than minimum documentation to the extent that such documents are included in the fields searched

Electronic data base consulted during the international search (name of data base and, where practicable, search terms used)

DWPI, WOTXT, CNABS, CNTXT, CPRS, CNKI: wavelength, switch, routing, router, circuit, port, secondary, input, output

## C. DOCUMENTS CONSIDERED TO BE RELEVANT

| Category* | Citation of document, with indication, where appropriate, of the relevant passages | Relevant to claim No. |
| --- | --- | --- |
| A | CN 1462125 A (SHANGHAI BELL CO., LTD.), 17 December 2003 (17.12.2003), the whole document | 1-5 |
| A | CN 1404254 A (SHANGHAI JIAO TONG UNIVERSITY et al.), 19 March 2003 (19.03.2003), the whole document | 1-5 |
| A | CN 1482814 A (HUAZHONG UNIVERSITY OF SCIENCE AND TECHNOLOGY), 17 March 2004 (17.03.2004), the whole document | 1-5 |
| A | CN 1402460 A (SHANGHAI JIAO TONG UNIVERSITY), 12 March 2003 (12.03.2003), the whole document | 1-5 |
| A | CN 1749788 A (ALCATEL), 22 March 2006 (22.03.2006), the whole document | 1-5 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 July 2014 (09.07.2014) | **23 July 2014 (23.07.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **XU, Jingwen** Telephone No.: (86-10) **62411385** |
| --- | --- |

Form PCT/ISA/210 (second sheet) (July 2009)

## INTERNATIONAL SEARCH REPORT
### Information on patent family members

International application No.

**PCT/CN2013/001341**

| Patent Documents referred in the Report | Publication Date | Patent Family | Publication Date |
|---|---|---|---|
| CN 1462125 A | 17 December 2003 | None | |
| CN 1404254 A | 19 March 2003 | CN 1324830 C | 04 July 2007 |
| CN 1482814 A | 17 March 2004 | CN 1255995 C | 10 May 2006 |
| CN 1402460 A | 12 March 2003 | CN 1330120 C | 01 August 2007 |
| CN 1749788 A | 22 March 2006 | EP 1646262 A1 | 12 April 2006 |
| | | FR 2875655 A1 | 24 March 2006 |
| | | US 7536103 B2 | 19 May 2009 |
| | | FR 2875655 B1 | 24 November 2006 |
| | | CN 100495098 C | 03 June 2009 |
| | | US 2006062575 A1 | 23 March 2006 |

Form PCT/ISA/210 (patent family annex) (July 2009)